# EUROPÄISCHE PATENTSCHRIFT

(11) **EP 2 809 595 B1**
(45) Veröffentlichungstag und Bekanntmachung des Hinweises auf die Patenterteilung: **30.03.2016**
(21) Anmeldenummer: 13701202.7
(22) Anmeldetag: 11.01.2013
(51) Int. Cl.: B65G 17/22, B65B 43/52

(54) **OVALE BEHÄLTERBEHANDLUNGSVORRICHTUNG**
OVAL CONTAINER TREATMENT APPARATUS
INSTALLATION OVALE POUR LE TRAITEMENT DE RÉCIPIENTS

(30) Priorität: 01.02.2012 DE 102012100811; 20.04.2012 DE 102012007778
(43) Veröffentlichungstag der Anmeldung: 10.12.2014
(73) Patentinhaber: KHS GmbH, 44143 Dortmund (DE)
(72) Erfinder: KOPPERS, Jörg, 47589 Uedem (DE); NITSCH, Thomas, 47533 Kleve (DE)
(86) Internationale Anmeldenummer: PCT/EP2013/000065
(87) Internationale Veröffentlichungsnummer: WO 2013/113464

(56) Entgegenhaltungen:
- EP-A2- 1 048 570
- EP-A2- 2 060 959
- US-A- 3 797 632
- US-A- 4 078 357
- US-A1- 2009 321 225

## Beschreibung

Die Erfindung bezieht sich auf eine Vorrichtung zur Behandlung von Behältern gemäß dem Oberbegriff des Patentanspruchs 1, umfassend eine ein- oder mehrbahnige Behälterzuführung oder ein- oder mehrbahnige Behälterströme mindestens einen um eine zentrale Achse rotierenden Hauptstern eines Sterntransporteurs mit mindestens einem Auftragselement im Bereich des Sterntransporteurs mittels mindestens ein Haft- oder Klebemittel und/oder mindestens ein Haft- oder Klebemittelauftrag auf oder an Behälter applizierbar ist.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde, die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird. In der DE 10 2008 038 146 A1 ist ein Wellentriebssystem offenbart, welches einen den Motor enthaltenen Koaxial-Direktantrieb aufweist, in dem der Rotor des Motors direkt auf der Welle festgelegt und der Stator die Welle und den Rotor außen umfassend fixiert sind. Die auf die Anmelderin zurückgehende EP 1 647 518 B1 offenbart eine Verschließmaschine, welche eine ortsfeste Zentralsäule aufweist, die frei von Elementen zur mechanischen Kraftübertragung ausgeführt ist, und demzufolge lediglich+ Leitungen enthält. In der US 3 797 632 ist eine Vorrichtung offenbart zur Behandlung von Flaschen umfassend ein ringförmig geschlossenes Führungs- und Trageelement das Abschnitte mit unterschiedlichen Radien umfasst.

Aufgabe der Erfindung ist es, eine Vorrichtung und ein Verfahren zum Herstellen von Gebinden der Eingangs genannten Art anzugeben, bei dem trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt bzw. wieder hergestellt werden kann.

Zur Lösung dieser Aufgabe ist eine Vorrichtung zur Behandlung von Behältern entsprechend dem Patentanspruch 1 vorgesehen, wobei das Führungs- und Tragelement Abschnitte mit unterschiedlichen Radien umfasst, insbesondere gerade Abschnitte, d.h. radiusfreie Abschnitte bzw. Abschnitte mit einem unendlich großen Radius, und kurvige Abschnitte, d.h. Abschnitte mit einem Radius umfasst, insbesondere in der Form eines Ovals oder einer Ellipse, wobei die Halte- und Zentriereinheit mittels Verbindungselementen verbunden sind, welche fluchtend zur jeweiligen vertikalen Rotationsachse oder konzentrisch zu dieser an der Halte- und Zentriereinheit gelagert und/oder befestigt sind, wodurch alle endlos umlaufenden vertikalen Rotationsachsen der Halte- und Zentriereinheiten respektive dort befindliche Behälter in jedem Abschnitt des Führungs- und Tragelements mit der selben Geschwindigkeit bewegbar sind.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft- oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf, bzw. ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinander trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heizleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation bzw. eine Aushärtstrecke ist in sinnvoller Weise stromab der Auftragselemente stationär oder entlang des Lineartransporteurs oberhalb bzw. gegebenenfalls auch unterhalb vorgesehen. Eine Aushärtstation kann zum Beispiel ein Tunnel mit UV-Ausleuchtung sein. Die Aushärtstation ist bevorzugt stromab dem Sterntransporteur, bevorzugt an dem Lineartransporteur angeordnet.

"Etiketten" im Sinne der Erfindung sind alle Ausstattungselemente, die auf die äußere Oberfläche eines Behälters geklebt oder mit welchen er ganz oder teilweise umwickelt wird, zum Zwecke der Produktbeschreibung und/oder Werbung.

Dabei umfasst die Vorrichtung ein ringförmig geschlossenes Führungs- und Tragelement, welches Schienen oder schienenartige Führungsbahnen umfasst. An diesen Schienen sind eine Vielzahl von kettenartig verbindbaren Behälterträgern eingehängt oder angeordnet, die, angetrieben durch mindestens einen zentralen Antrieb, endlos umlaufend angetrieben werden können. Dabei ist jeder Behälterträger zur Aufnahme eines einzelnen Behälters ausgebildet und umfasst eine Halte- und Zentriereinheit zum Halten und Zentrieren des jeweiligen Behälters. Integriert in den Behälterträger sind je ein Einzelantrieb, zur Drehung und/oder Rotation eines Behälters um dessen Behälterhochachse. Weiterhin ist Teil der Behälterträger mindestens eine schlitten- oder wagenartige Führungseinheit, mittels welcher diese an dem Führungs- und Tragelement, bzw. an den Schienen oder Führungsbahnen, gelagert und somit endlos umlaufend verfahrbar sind. Dabei ist die gedachte vertikale Rotationsachse des Halte- und Zentriereinheit und die des Einzelantriebes, deckungsgleich mit der Hochachse eines eingestellten Behälters. Das Führungs- und Tragelement formt damit die Transportstrecke der Behälter und umfasst Abschnitte mit unterschiedlichen Radien, insbesondere gerade Abschnitte, d.h. radiusfreie Abschnitte bzw. Abschnitte mit einem unendlich großen Radius, sowie kurvige Abschnitt, d.h. Abschnitte mit einem oder mehreren Radien. Insbesondere ist das Führungs- und Tragelement, bzw. die gesamte Behandlungsvorrichtung also in der Form eines Ovals oder einer Ellipse gebildet, wobei die Halte- und Zentriereinheit mittels Verbindungselementen verbunden sind, welche fluchtend zur jeweiligen vertikalen Rotationsachse oder konzentrisch zu dieser an der Halte- und Zentriereinheit gelagert und/oder befestigt sind. Dies hat den Vorteil, dass alle endlos umlaufenden die vertikalen Rotationsachsen der Halte- und Zentriereinheiten respektive dort befindliche Behälter in jedem Abschnitt des Führungs- und Tragelements mit derselben Geschwindigkeit beschleunig- bzw. bewegbar sind.

Dabei weist die Halte- und Zentriereinheit bodenseitig einen rotier- oder antreibbaren Drehteller und/oder kopfseitig eine ebenfalls rotier- oder antreibbare Zentrier- und Haltetulpe auf. Dabei ist es vorteilhaft, wenn der antreibbaren Drehteller und/oder die rotier- oder antreibbare Zentrier- und Haltetulpe am Ende einer Welle angeordnet ist, und die Welle über eine Transmissions-, Zahn-, Keilriemen oder dergleichen mit einem Steuerrad in Wirkverbindung steht, und wobei das Steuerrad einen Steuerbolzen aufweist, mittels welchem im Zusammenwirken mit einer Steuerkurve das Steuerrad und mittelbar somit auch die Welle antreibbar sind.

Bei einer vorteilhaften Ausformung weisen die eine Mehrzahl der Behälterträger, idealerweise alle Behälterträger, ein Eingriffelement in Form eines Zahns, Bolzens oder Rades auf, welche von dem zentralen Antrieb erfassbar und antreibbar sind. Dabei sollte der zentrale Antrieb derart geformt sein, dass immer die Eingriffselemente von mindestens zwei Halte- und Zentriereinheiten gleichzeitig erfassbar sind.

Besonders vorteilhaft ist es, den zentralen Antrieb als eine Antriebsschnecke oder -spindel auszuformen. Der Motor sollte vorteilhafterweise als ein stufenlos regelbarer Servoantrieb, insbesondere als ein Rohrantrieb gebildet sein.

Alternativ hierzu kann unterhalb der Drehteller eine kurvengängige Zahnkette angeordnet sein, die mit mindestens einigen der Behälterträger verbunden ist. Bei dieser Variante greift der zentrale Antrieb mittels einem oder mehreren Zahnrädern, -bändern oder dergleichen in die Zähne der Zahnkette ein und treibt diese somit an.

Da die Behälter zueinander immer identisch beabstandet bleiben können und stets die selbe Geschwindigkeit aufweisen, ist es vorteilhaft, wenn die Behälterträger eine keil- oder segmentförmige Schattenfläche, ähnlich einem Tortenstück, aufweisen, so dass diese in den Kurven mit dem radial innen liegenden Ende angenähert oder verdichtet werden können.

Besonders vorteilhaft und stabil ist das Laufverhalten, wenn das Führungs- und Tragelement mindestens zwei übereinander angeordnete Schienen aufweist und die Behälterträger hierzu korrelierende schlitten- oder wagenartige Führungseinheiten umfassen.

Die vorgenannte Vorrichtung kann Teil einer nachstehend beispielhaft beschriebenen Gebindeherstellungs- oder Etikettiervorrichtung sein und hierzu an oder entlang ihrer Transportweges ein oder mehrere Auftrags- oder Spenderelemente in Form von Applikationsvorrichtungen für Leim- oder Klebemittel oder für Einzelblatt- oder Rundumetiketten umfassen.

Zielführend ist, wenn der Sterntransporteur den Hauptstern, eine Einleitvorrichtung und die Ausleitvorrichtung aufweist. Die Einleitvorrichtung kann als Einleitstern ausgeführt sein, wobei die Ausleitvorrichtung als Ausleitstern ausgeführt sein kann. Die Einleitvorrichtung bewirkt eine Anpassung des einlaufenden Behälterstromes an die Teilung des Hauptsterns, so dass die jeweiligen Behälter problemlos an den Hauptstern übergeben werden können. Mit der Ausleitvorrichtung können die Behälter in vorbestimmten Abstand weitertransportiert werden.

Zweckmäßig ist, wenn die fußseitigen Führungen als Drehteller ausgeführt sind, wobei die Kopfführungen halteseitig Pack- oder Zentriertulpen aufweisen, oder als diese ausgestaltet sind. Der jeweilige Behälter ist so quasi zwischen dem Drehteller und der Pack- oder Zentriertulpe eingespannt, und lagesicher gehalten. Mit dem Drehteller und der Kopfführung kann eine zur Rotation um die Achse des Hauptsterns zusätzliche Rotation des einzelnen Behälters bewirkt werden. Dies ist günstig, um den Behälter auf seinem Transportweg um die Rotationsachse des Hauptsterns relativ zu diesem zu verdrehen, so dass in Umfangsrichtung des Behälters mehrere Kontakt- und Berührflächen des Behälters mit Haft- oder Klebemittel versehen werden können. Zweckmäßig ist dabei auch, wenn mehrere Auftragselemente vorgesehen sind, welche in Rotationsrichtung des Hauptsterns gesehen aufeinander folgen. Mittels der Drehteller können die aufstehenden Behälter zudem noch günstiger Weise nach bestimmten Behälter- und/oder Ausstattungsmerkmalen, also beispielsweise nach so genannten Embossings ausgerichtet und sodann behälterspezifisch so mit Haft- und Klebemittel versehen werden, dass die Behälter eines Gebindes genau identisch ausgerichtet zueinander innerhalb des Gebindes aufgenommen sind.

In bevorzugter Ausgestaltung kann vorgesehen sein, dass jeweils zwei Auftragselemente übereinander angeordnet sind, wobei die nachfolgenden Auftragselemente ebenso übereinander angeordnet sind. So kann jeweils ein Auftragselement stets genau einen Behälterbereich, also einen Abschnitt der Kontakt- und Berührfläche mit Haft- und Klebemittel versehen. Natürlich können die Auftragselemente beispielsweise bei einem sprühenden oder spritzenden Auftrag von Haft- und Klebmittel steuerbar sein, also in ihrer Neigung bezüglich jeder Raumachse einstellbar sein. Selbstverständlich können die Auftragselemente auch zumindest eine Teilstrecke mit dem betreffenden Behälter mitgeführt werden, was aber nicht zwingend notwendig ist.

Dem Sterntransporteur, bevorzugt dem Hauptstern oder der Ausleitvorrichtung ist unmittelbar ein Lineartransporteur nachgeschaltet, welcher beispielsweise als Abteil- oder Verdichterstrecke fungiert, wobei die Behälter zu Gebinden zusammengefasst und weitertransportiert werden, und wobei statische und/oder bewegliche Führungselemente jeweils seitlich des Lineartransporteurs vorgesehen sein können, und wobei Mitnehmerelemente vorgesehen werden können, welche jeweils einem Gebinde zugeordnet sind.

Die Führungselemente können auch als Geländer bezeichnet werden, welche die Gebinde, bzw. die Behälter des Gebindes zwischen sich führen bzw. stützen. Denkbar ist, die Führungselemente starr auszuführen. Möglich ist aber auch, die Führungselemente mitlaufend auszuführen, so dass die Behälter bzw. die Gebinde keine Relativgeschwindigkeit zu den seitlich angeordneten Führungselementen aufweisen. Mit den seitlich angeordneten Führungselementen kann ein seitlicher Druck erzeugt werden, welcher einer Klebverbindung der Behälter des Gebindes zweckdienlich ist. Mit anderen Worten haben die Führungselemente nicht nur die Funktion des Führens und Stützens sondern auch noch die Funktion eine auf die Behälter wirkende Kraft zu erzeugen, welche die Behälter bzw. das Gebinde quer zur Transportrichtung gesehen verdichtet, bzw. einander annähert, gegeneinander drückt oder anpresst, um so eine hinreichende Klebverbindung bewirken zu können.

In bevorzugter Ausgestaltung sind die Mitnehmerelemente quer zur Transportrichtung angeordnet, und übergreifen den Lineartransporteur vollständig, wobei die Mitnehmerelemente in Transportrichtung gesehen hinter dem Gebinde angeordnet, so dass die Mitnehmerelemente das Gebinde quasi vor sich herschieben. Hierdurch wird vorteilhaft eine Kraft erzeugt, welche eine Verbindung der Behälter untereinander in oder entgegen der Transportrichtung gesehen, bzw. eine Verdichtung unterstützt. Um den Verbund der Behälter des Gebindes untereinander nicht nur quer zur Transportrichtung, sondern auch in Transportrichtung gesehen zu verbessern, können die Mitnehmer in Transportrichtung gesehen eine bezüglich des Transporteurs bewirkende Relativgeschwindigkeit auf die Behälter bzw. auf das Gebinde aufbringen. Ist die Fördergeschwindigkeit des bzw. der Mitnehmerelemente größer als die Fördergeschwindigkeit des Lineartransporteurs, bewirkt dies ein Schieben bzw. Gleiten der Behälter bzw. des Gebindes von der Eingangsseite in Richtung zur Austragsseite. Ersichtlich ist, dass die Schiebekraft den Klebverbund deutlich erhöhen kann. Die Mitnehmerelemente können in bevorzugter Ausgestaltung als Stab, also als Mitnehmerstab ausgeführt sein. Weiter können die Mitnehmerelemente selbst angetrieben sein, und/oder mit den Führungselementen in Verbindung stehen. Insofern könnten die Führungselemente zu den bereits genannten Funktionen quasi noch die Führungsfunktion für die Mitnehmerelemente übernehmen. Sind die Führungselemente angetrieben, also umlaufend vorgesehen, liegt es durchaus im Sinne der Erfindung, die Mitnehmerelemente starr an den Führungselementen zu befestigen, wobei die oben erwähnte Relativgeschwindigkeit mittels des Führungselementenantriebes erzeugt werden könnte. Die Führungselemente könnten auch in Querrichtung betrachtet einstellbar sein, so dass die Vorrichtung auch auf unterschiedliche Behälterdimensionen einstellbar ist. Die Fördergeschwindigkeit des Lineartransporteurs, der Führungselemente und/oder der Mitnehmerelemente kann individuell einstellbar sein, wozu geeignete Steuerzentralen bzw. Zentrale Steuereinheiten einer Gesamtanlage herangezogen werden können.

Möglich ist, das Gebinde noch mit einem Trageelement, beispielsweise mit einem Griff zu versehen, wozu geeignete Vorrichtungen vorgesehen werden können, welche stromab der Austragsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt bzw. wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden, bzw. der Verpackungsmaschine direkt aneinander geklebt. Zudem ist ein folienloser Flaschenpack bei minimalem Klebemittelauftrag erreichbar, welcher eine hinreichende Bindung der einzelnen Behälter zueinander aufweist.

Wie bereits oben angeführt, können die Behälter beispielsweise nach Gestaltungsmerkmalen ausgerichtet werden. Möglich ist, die Ausrichtfunktion auf einen gesonderten Ausrichtstern zu übertragen, welcher dem Hauptstern vorgeschaltet ist. Die Behälterströme können dem Ausrichtstern über einen Einleitstern zugeführt werden, wobei der Einleitstern dem zuvor genannten entspricht. Zwischen dem Ausrichtstern und dem Hauptstern ist bevorzugt ein Übergabestern angeordnet, welcher in weiter bevorzugter Ausführung die Dimensionen des Einleitsterns und/oder des zuvor genannten Ausleitsterns aufweisen kann. An dem Ausrichtstern sind Erkennungssysteme, also z.B. Kamerasysteme angeordnet, welche die tatsächliche IstPosition beispielsweise von Etiketten und/oder Embossings und/oder anderen Merkmalen aufnimmt. Die Istdaten werden einer Auswerteeinheit zugeführt, in welcher ein Vergleich mit abgelegten Solldaten durchgeführt wird, so dass kopf- bzw. fußseitige Führungen, wie zum Beispiel Packtulpen oder Drehteller eine entsprechende Überführung des betreffenden Behälters in die gewünschte Soll-Position bewirken können. Eine solche Ausrichtung ist zum Beispiel bei Etikettiermaschinen bekannt, bei welcher z.B. Flaschen so ausgerichtet werden, dass Etiketten gleichorientiert auf den Flaschen aufgebracht werden. Zielführend kann mit der Ausrichtung bzw. mit dem Ausrichtstern erreicht werden, dass die Behälter mit Etiketten und/oder anderen Gestaltungsmerkmalen gleich orientiert in dem zukünftigen Gebinde aufgenommen sind; Denn die Behälter werden im Ausrichtstern in die jeweilige Sollposition überführt, wobei der in die individuelle Sollposition ausgerichtete Behälter nachfolgend in dem Hauptstern wie beschrieben behandelt wird. Der in die Sollposition ausgerichtete Behälter verbleibt entlang seines Transportweges in dieser.

Selbstverständlich können Behälter mit unterschiedlichen Dimensionen bzw. Formaten behandelt werden. Steht gegebenenfalls ein Formatwechsel an, müssen die Betriebsparameter und -komponenten auf das neue Behälterformat angepasst werden. Beispielsweise könnten Ein-, Überleit- und/oder Ausleitsterne ausgetauscht werden, wobei bei der Erfindung zielführend vorgesehen ist, den Ausrichtstern und/oder den Hauptstern mit verstellbaren Hauptachsen auszuführen, so dass der Ausrichtstern und/oder der Hauptstern trotz des Formatwechsels mit seinen Komponenten in der Behandlungsanlage verbleiben kann. Die Hauptachsen des Hauptsterns und/oder des Ausrichtsterns sind bevorzugt entlang der Transportrichtung und quer dazu überlagerbar auf das neue Behälterformat einstellbar. Die kopf- und/oder fußseitigen Führungen sind bevorzugt universell nutzbar ausgeführt.

Zielführend im Sinne der Erfindung ist auch, wenn der Sterntransporteur bzw. dessen Komponenten, bevorzugt der Hauptstern und/oder der Ausrichtstern mit einer Standsäule ausgeführt ist, in welcher ein Antriebselement integriert ist. Das Abtriebselement ist bevorzugt als ansteuerbarer E-Motor ausgeführt. Die Standsäule kann wie zuvor erwähnt natürlich entlang der Verstellachsen verfahrbar sein, um sich z.B. einem Formatwechsel anpassend einzustellen. Anstelle einer linearen Zuführung können die Behälter auch mittels eines Transportsternes für jeden Behälterstrom zugeführt werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen eines Gebindes mit sechs Artikeln bzw. Behältern in einer perspektivischen Ansicht,
- Fig. 2: den Teilabschnitt aus Figur 1 in einer Aufsicht,
- Fig. 3: den Teilabschnitt aus Figur 1 in einer Seitenansicht,
- Fig. 4: eine beispielhafte Ausgestaltung einer Abteil- oder Verdichterstrecke in der beispielhaften Ausgestaltung als Lineartransporteur,
- Fig. 5: den Teilabschnitt aus Figur 1 in einer Aufsicht mit vorgeschalteten Ausrichtstern und anschließender Abteil- oder Verdichterstrecke
- Fig. 6: den Teilabschnitt aus Figur 5 in einer Seitensicht,
- Fig. 7: den Teilabschnitt aus Figur 5 in einer Frontansicht von der Einlaufseite her,
- Fig. 8: einen Transporteur in weiterer, ovaler bzw. elliptischer Ausgestaltung als Einzelheit in einer perspektivischen Aufsicht,
- Fig. 9: einen vergrößerten Abschnitt des Transporteurs aus Figur 8,
- Fig.10: den einzelnen Transporteur aus Figur 8 in einer Seitenansicht,
- Fig. 11: den einzelnen Transporteur aus Figur 8 in einer Aufsicht,
- Fig. 12: den einzelnen Transporteur aus Figur 8 in einer vergrößerten perspektivischen Ansicht von unten.

In den unterschiedlichen Figuren sind gleiche Teile stets mit denselben Bezugszeichen versehen, weswegen diese in der Regel auch nur einmal beschrieben werden.

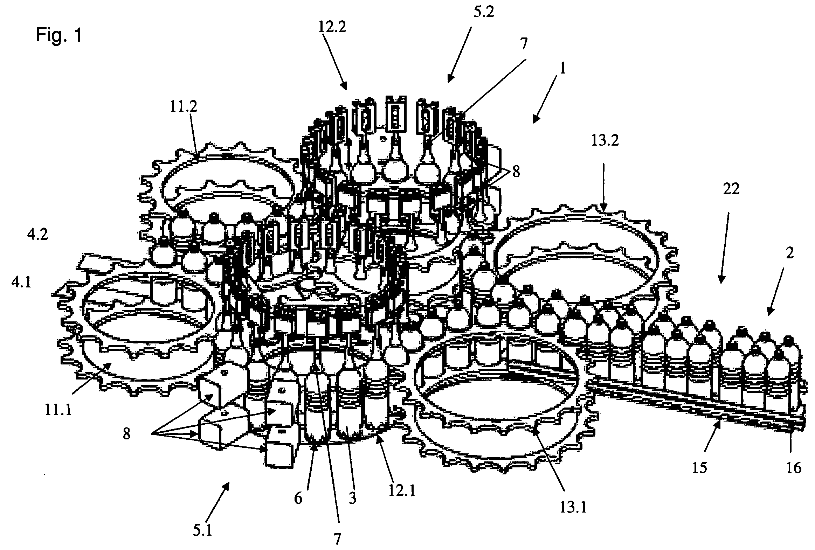

Figur 1 zeigt einen Teilabschnitt einer Vorrichtung 1 zur Herstellung von Gebinden 2 aus Behältern 3, bzw. einer Verpackungsmaschine 1, wobei im Vorfeld aus einem breitem Behälterstrom Behälter 3 in mehrere, wie dargestellt beispielhaft in zwei einspurige Behälterströme 4.1 und 4.2 umgewandelt werden, in welchem die Behälter 3 beispielsweise bezüglich ihrer Behälter - und/oder Ausstattungsmerkmale eine willkürliche Orientierung aufweisen.

Jeweils ein Sterntransporteur 5 bzw. 5.1 und 5.2 ist für jeden der Behälterströme 4.1 und 4.2 vorgesehen ist, wobei der jeweilige Sterntransporteur 5 eine Vielzahl von fußseitigen Führungen 6 und Kopfführungen 7 für die Behälter 3 aufweist, wobei die Auftragselemente 8 an dem Sterntransporteur bzw. an seinem Hauptstern 12 bzw. 12.1 und 12.2 angeordnet sind, wobei die Behälter 3 stromab des Sterntransporteurs 5 zu dem Gebinde 2 zusammengefasst werden.

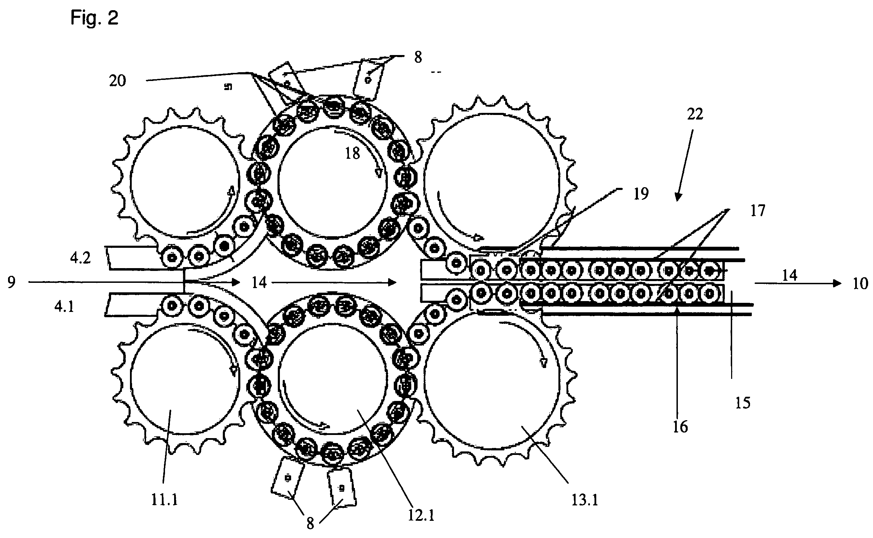

Die Behälter 3 werden von einer Eingangsseite 9 in Richtung zu einer Ausgangsseite 10 transportiert (axiale Transportrichtung 14), wobei die Auftragselemente 8 an dem Sterntransporteur 5 zum Auftragen von Haft- oder Klebemittel vorgesehen sind und wobei die Behälter 3 stromab des Sterntransporteurs 5 zu dem Gesamtgebinde 2 zusammengeführt und in Richtung zur Austragsseite 10 transportiert werden (Figur 2).

Figur 1 zeigt, dass jeder Sterntransporteur 5 bzw. 5.1 und 5.2 eine Einleitvorrichtung 11 bzw. 11.1 und 11.2, den Hauptstern 12, bzw. 12.1 und 12.2 und eine Ausleitvorrichtung 13 bzw. 13.1 und 13.2 für die jeweilige Behälterspur 4.1 und 4.2 aufweist. Die Einleitvorrichtung 11 ist als Einleitstern ausgeführt, wobei die Ausleitvorrichtung 13 als Ausleitstern ausgeführt ist. Da für jede Behälterspur 4.1 und 4.2 jeweils ein Sterntransporteur 5 vorgesehen ist, werden diese, bzw. deren Komponenten in den Figuren mit der Begleitzahl .1 bzw. 2 versehen um die Zuordnung zu der jeweiligen Behälterspur 4.1 und 4.2 zu verdeutlichen. Die jeweiligen Komponenten sind natürlich jeweils identisch.

Beispielhaft sind die fußseitigen Führungen 6 an dem Hauptstern 12 als Drehteller ausgeführt sind, wobei dessen Kopfführungen 7 halteseitig Pack- oder Zentriertulpen aufweisen bzw. als solche ausgestaltet sind. Der jeweilige Behälter 3 ist so quasi zwischen dem Drehteller 6 und der Packtulpe 7 lagesicher gehalten. Drehteller und Pack- oder Zentriertulpen sind zum Beispiel aus Etikettiermaschinen bekannt.

Wie in den Figuren 1 und 2 erkennbar sind mehrere Auftragselemente 8 an dem Hauptstern 12 vorgesehen, welche in Rotationsrichtung (Pfeil 18) des Hauptsterns 12 gesehen aufeinander folgen. Mittels der Drehteller 6 können die aufstehenden Behälter zudem noch günstiger Weise nach bestimmten Behälter- und/oder Ausstattungsmerkmalen, also beispielsweise nach so genannten Embossings ausgerichtet und sodann behälterspezifisch so mit Haft- und Klebemittel versehen werden, dass die Behälter 3 eines Gebindes 2 genau identisch ausgerichtet zueinander innerhalb des Gebindes 2 aufgenommen sind. Ein Drehen der Behälter kann aber auch nur einfach deswegen ausgeführt werden, um den oder die Behälter 3 in Umfangsrichtung gesehen an mehreren Kontakt- und Berührflächen mit Haft- und Klebemittel zu versehen. Ein Ausrichten bzw. Drehen z. B. vor Auftragselementen 8 und/oder zwischen in Rotationsrichtung 19 folgenden Auftragselementen 8 ist mit dem Bezugszeichen 20 in Figur 2 angedeutet.

In bevorzugter Ausgestaltung kann vorgesehen sein, dass jeweils zwei Auftragselemente 8 übereinander angeordnet sind, wobei die nachfolgenden Auftragselemente 8 ebenso übereinander angeordnet sind. So kann jeweils ein Auftragselement 8 stets genau einen Behälterbereich, also einen Abschnitt der Kontakt- und Berührfläche mit Haft- und Klebemittel versehen. Natürlich können die Auftragselemente 8 beispielsweise bei einem sprühenden oder spritzenden Auftrag von Haft- und Klebmittel steuerbar sein, also in ihrer Neigung bezüglich jeder Raumachse einstellbar sein. Selbstverständlich können die Auftragselemente 8 auch zumindest eine Teilstrecke mit dem betreffenden Behälter 3 mitgeführt werden, was aber nicht zwingend notwendig ist.

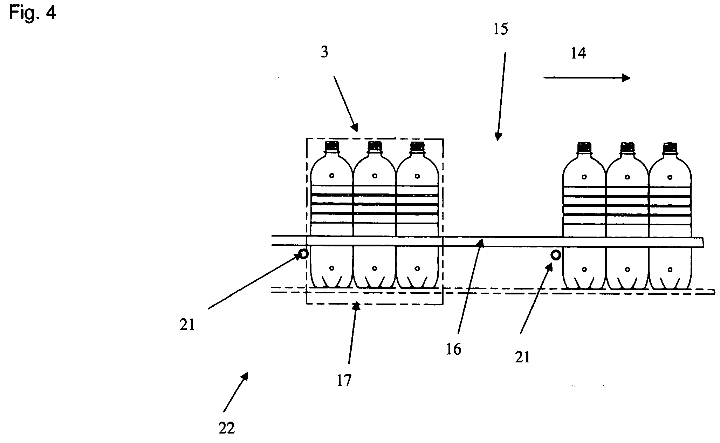

Unmittelbar stromab der Ausleitvorrichtung 13, bzw. beider Ausleitsterne 13.1 und 13.2 ist ein Lineartransporteur 15 angeordnet, welcher als Abteil- und/oder Verdichterstrecke 22 fungiert. Die Ausleitvorrichtung 13 bzw. die beiden Ausleitsterne 13.1 und 13.2 führen die klebenden Behälter 3 zusammen und übergeben die klebenden Behälter 3 Paarweise an den Lineartransporteur 15, was in Figur 2 mittels des Bezugszeichens 19 dargestellt ist. Dabei sind zunächst jeweils zwei klebende Behälter 3 über die Kontakt- und Berührflächen aneinander gedrückt, wobei der Lineartransporteur 15 so ausgeführt sein kann, dass ein Zusammenführen von mehreren, beispielsweise von drei Behälterpaaren zu dem Gebinde 2, welches sechs Behälter 3 aufweist, bewirkt wird. Hierzu kann der Lineartransporteur 15 Mitnehmerelemente 21 aufweisen, wobei zudem noch seitliche Führungselemente 16 vorgesehen werden können, wie in Figur 4 erkennbar ist.

Weiterhin zeigt die Figur 4, dass dem Sterntransporteur 5, bzw. der Ausleitvorrichtung 13 also der Lineartransporteur 15 nachgeschaltet ist, wobei statische und/oder bewegliche Führungselemente 16 jeweils seitlich des Lineartransporteurs 15 vorgesehen sein können, und wobei Mitnehmerelemente 21 vorgesehen werden können, welche jeweils einem Gebinde 2 zugeordnet sind. Die Mitnehmerelemente 21 können ein Zusammenführung entlang der axialen Transportrichtung 14, also ein aneinanderdrücken der Behälter 3 eines Gebindes 2 bewirken. Die Führungselemente 16 können eine Anpresskraft der Behälter 3 quer zur Transportrichtung 14 bewirken, so dass auch in Querrichtung der Klebeverbund günstig beeinflusst wird.

Wird eine Aushärtestation 17, zum Beispiel in der Ausgestaltung als UV-Aushärtestation für UV-aushärtenden Klebstoff erforderlich, ist diese zweckdienlich an dem Lineartransporteur 15 angeordnet.

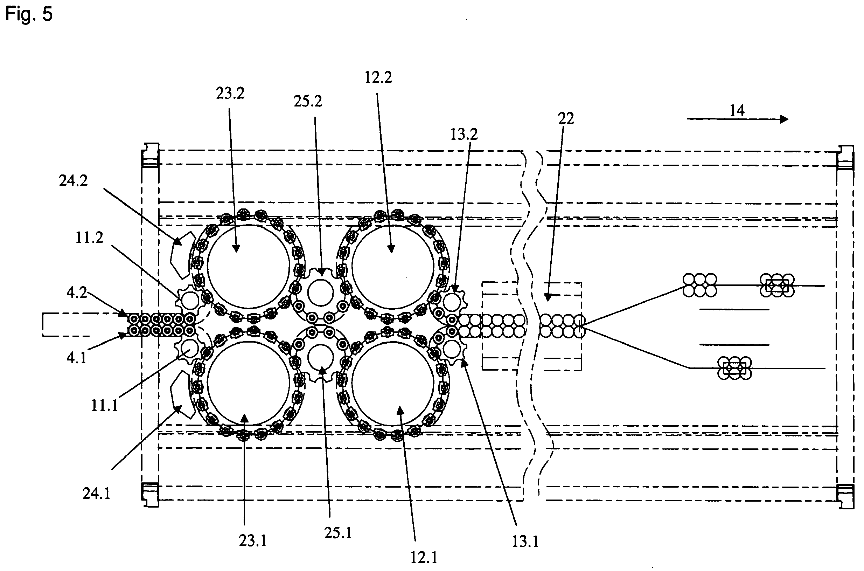

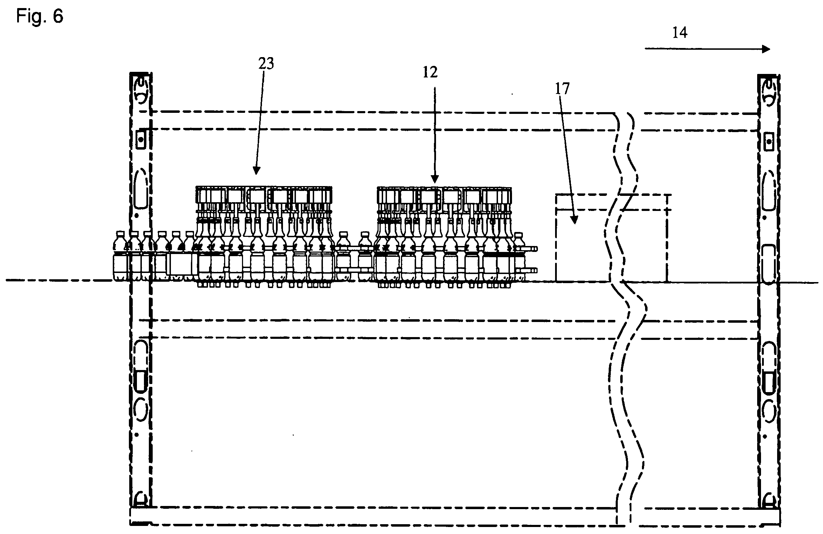

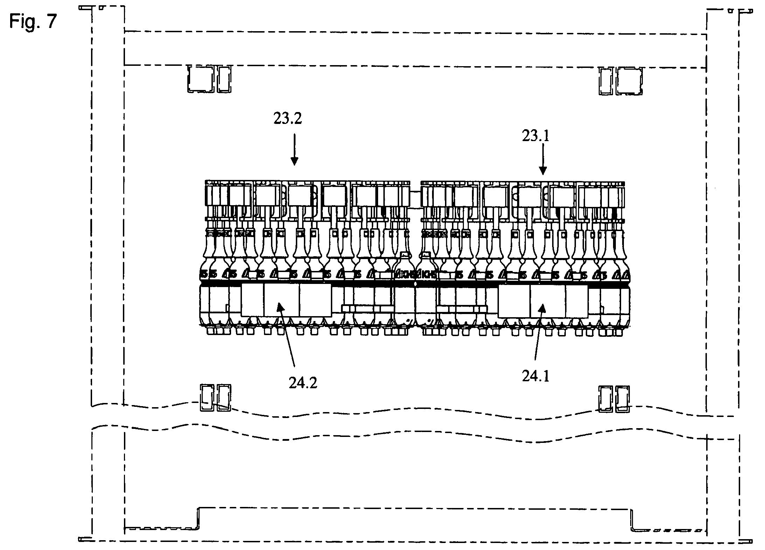

Wie bereits erwähnt, kann die Ausrichtung der Behälter 3 in eine Sollposition entlang des Transportweges des Hauptsterns 12.1 bzw. 12.2 erfolgen. Bei dem in den Figuren 5 bis 7 gezeigten Ausführungsbeispiel wird die Ausrichtung an einem Ausrichtstern 23.1 und 23.2 durchgeführt, welcher dem jeweiligen Hauptstern 12.1 und 12.2 vorgelagert ist. Die Behälter 3 der Behälterströme 4.1 und 4.2 werden dem Ausrichtstern 23.1 bzw. 23.2 über den jeweiligen Einleitstern 11.1 bzw. 11.2 zugeführt. An dem jeweiligen Ausrichtstern 23.1 bzw. 23.2 sind jeweils Erkennungssystem 24.1 bzw. 24.2 in der beispielhaften Ausgestaltung als Kamerasystem angeordnet. Zwischen dem jeweiligen Ausrichtstern 23.1 bzw. 23.2 und dem jeweiligen Hauptstern 12.1 bzw. 12.2 ist jeweils ein Übergabestern 25.1 bzw. 25.2 angeordnet, welcher in weiter bevorzugter Ausführung die Dimensionen des Einleitsterns 11.1 bzw. 11.2 und/oder des zuvor genannten Ausleitsterns 13.1 bzw. 13.2 aufweisen kann. Die beispielhaften Kamerasysteme 24.1 bzw. 24.2 nehmen die tatsächliche Ist-Position beispielsweise von Etiketten und/oder Embossings und/oder anderen Merkmalen auf. Die Istdaten werden einer Auswerteeinheit zugeführt, in welcher ein Vergleich mit abgelegten Solldaten durchgeführt wird, so dass kopf- bzw. fußseitige Führungen, wie zum Beispiel Packtulpen 7 oder Drehteller 6 eine entsprechende Überführung des betreffenden Behälters 3 in die gewünschte Soll-Position bewirken können. Der in die Sollposition ausgerichtete Behälter 3 verbleibt entlang seines Transportweges in dieser. Der Gebindestrom wird im weiteren Verlauf der Abteil- und/oder Verdichterstrecke 22 beispielhaft in zwei parallele Gebindeströme aufgeteilt, wie in Figur 5 beispielhaft erkennbar ist.

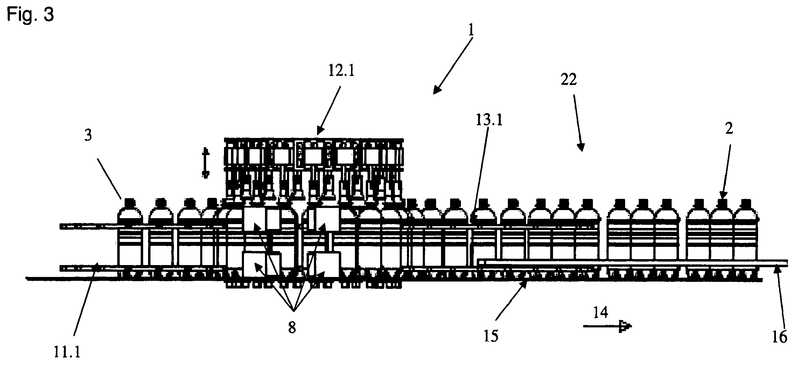

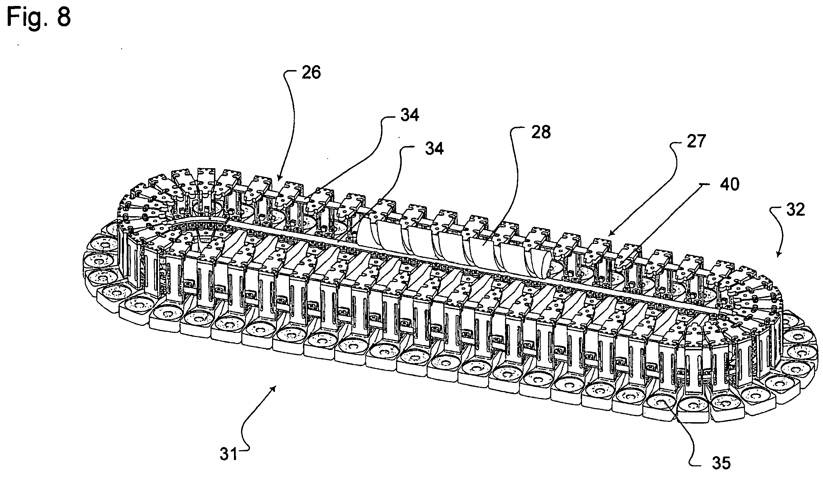

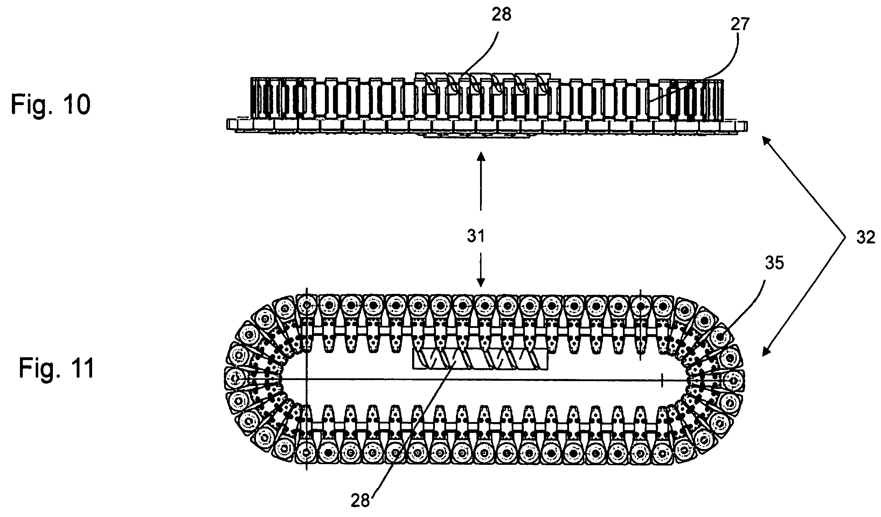

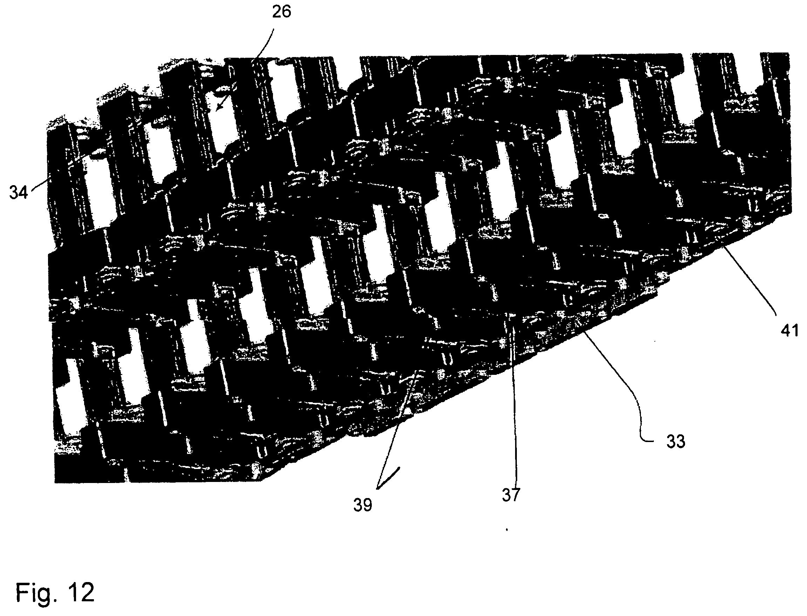

Die Einbringung der Behälter sowie deren Zentrier- und Halterung, muss für die Figuren 8 bis 12 analog zu den Figuren 1 bis 7 ergänzt bzw. adaptiert werden, was dem Fachmann jederzeit möglich ist.

In Figur 8 ist ein Ausführungsbeispiel gezeigt, bei welchem die Sterntransporteure jeweils eine ovale bzw. elliptische Grundform aufweisen können. Die Behälterströme werden entsprechend dem zuvor beschriebenen zugeleitet und weitergeführt. Lediglich die Grundform des Transporteurs unterscheidet sich, wobei alle anderen Gegebenheiten unverändert sein sollen. Optional kann ein Übergabestern zwischen aufeinander folgenden Ovaltransporteuren vorgesehen sein, was nicht unbedingt erforderlich ist. Ein in Behälterstromrichtung erster Ovaltransporteur kann als Ausrichtstern ausgeführt sein, wobei der folgende als Hauptstern ausgeführt sein kann.

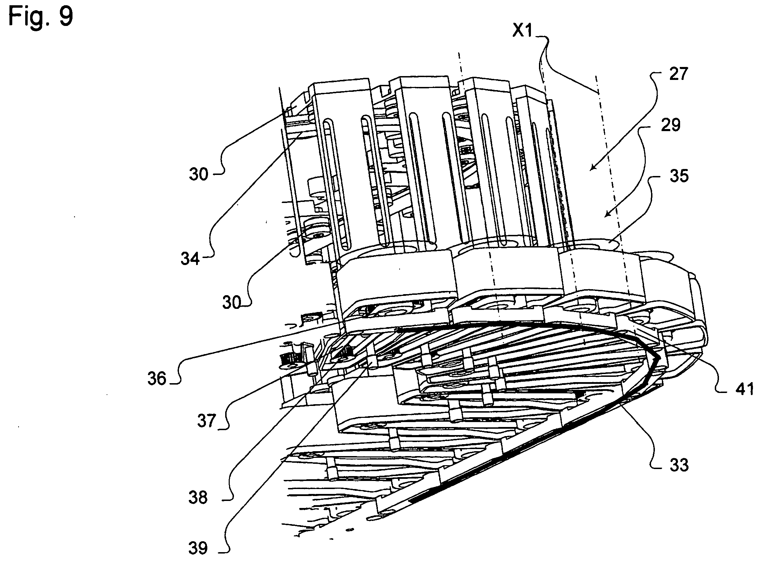

Die Figuren 8 bis 12 zeigen beispielhaft eine Vorrichtung zur Behandlung von nicht dargestellten Behältern, insbesondere Dosen, Flaschen und dergleichen, umfassend ein ringförmig geschlossenes Führungs- und Tragelement 26, sowie eine Vielzahl von kettenartig verbindbaren Behälterträgern 27, und mindestens einem zentralen Antrieb 28, wobei jeder Behälterträger 27 zur Aufnahme eines einzelnen Behälters ausgebildet ist und umfassend eine Halte- und Zentriereinheit 29 (Figur 9) zum Halten und Zentrieren des jeweiligen Behälters, welche einen Einzelantrieb zur Drehung oder Rotation um dessen Behälterhochachse umfasst, und weiterhin die Behälterträger 27 schlitten- oder wagenartige Führungseinheiten 30 (Figur 9) umfassen, mittels welcher diese an dem Führungs- und Tragelement 26 endlos umlaufend verfahrbar sind, wobei eine gedachte vertikale Rotationsachse des Halte- und Zentriereinheit 29 und der des Einzelantriebes, deckungsgleich mit der Hochachse eines eingestellten Behälters ist.

Das Führungs- und Tragelement 26 umfasst Abschnitte mit unterschiedlichen Radien, insbesondere gerade Abschnitte 31, d.h. radiusfreie Abschnitte bzw. Abschnitte mit einem unendlich großen Radius, und kurvige Abschnitte 32, d.h. Abschnitte mit einem Radius, umfasst, insbesondere in der Form eines Ovals oder einer Ellipse, wobei die Halte- und Zentriereinheit 29 mittels Verbindungselementen 33 (Figur 9) verbunden sind, welche fluchtend zur jeweiligen vertikalen Rotationsachse oder konzentrisch zu dieser an der Halte- und Zentriereinheit 29 gelagert und/oder befestigt sind, wodurch alle endlos umlaufenden vertikalen Rotationsachsen der Halte- und Zentriereinheiten 29 respektive dort befindliche Behälter in jedem Abschnitt des Führungs- und Tragelements 26 mit der selben Geschwindigkeit bewegbar sind.

Also umfasst die Vorrichtung das ringförmig geschlossenes Führungs- und Tragelement 26, welches Schienen 34 oder schienenartige Führungsbahnen umfasst. An diesen Schienen 34 sind eine Vielzahl von kettenartig verbindbaren Behälterträgern 27 eingehängt oder angeordnet, die, angetrieben durch den zentralen Antrieb 28, endlos umlaufend angetrieben werden können. Dabei ist jeder Behälterträger 27 zur Aufnahme eines einzelnen Behälters ausgebildet und umfasst die Halte- und Zentriereinheit 29 zum Halten und Zentrieren des jeweiligen Behälters. Integriert in den Behälterträger 27 sind je ein Einzelantrieb, zur Drehung und/oder Rotation eines Behälters um dessen Behälterhochachse. Weiterhin ist Teil der Behälterträger 27 die schlitten- oder wagenartige Führungseinheit 30, mittels welcher diese an dem Führungs- und Tragelement 26, bzw. an den Schienen 34 oder Führungsbahnen, gelagert und somit endlos umlaufend verfahrbar sind. Dabei ist die gedachte vertikale Rotationsachse des Halte- und Zentriereinheit 29 und die des Einzelantriebes, deckungsgleich mit der Hochachse eines eingestellten Behälters. Das Führungs- und Tragelement 26 formt damit die Transportstrecke der Behälter und umfasst Abschnitte 31 und 32 mit unterschiedlichen Radien, insbesondere gerade Abschnitte 31, d.h. radiusfreie Abschnitte bzw. Abschnitte mit einem unendlich großen Radius, sowie kurvige Abschnitte 32, d.h. Abschnitte mit einem oder mehreren Radien. Insbesondere ist das Führungs- und Tragelement 26, bzw. die gesamte Behandlungsvorrichtung also in der Form eines Ovals oder einer Ellipse gebildet, wobei die Halte- und Zentriereinheit 29 mittels Verbindungselementen 33 verbunden sind, welche fluchtend zur jeweiligen vertikalen Rotationsachse oder konzentrisch zu dieser an der Halte- und Zentriereinheit 29 gelagert und/oder befestigt sind. Dies hat den Vorteil, dass alle endlos umlaufenden die vertikalen Rotationsachsen X1 der Halte- und Zentriereinheiten 29 respektive dort befindliche Behälter in jedem Abschnitt des Führungs- und Tragelements 26 mit derselben Geschwindigkeit beschleunig- bzw. bewegbar sind.

Erkennbar weist die Halte- und Zentriereinheit 29 bodenseitig einen rotier- oder antreibbaren Drehteller 35 und/oder kopfseitig eine ebenfalls rotier- oder antreibbare, nicht dargestellte Zentrier- und Haltetulpe auf. Dabei ist es vorteilhaft, wenn der antreibbaren Drehteller 35 und/oder die rotier- oder antreibbare Zentrier- und Haltetulpe am Ende einer Welle 36 angeordnet ist, und die Welle 36 über eine Transmissions-, Zahn-, Keilriemen 37 oder dergleichen mit einem Steuerrad 38 in Wirkverbindung steht, und wobei das Steuerrad 38 einen Steuerbolzen 39 aufweist, mittels welchem im Zusammenwirken mit einer Steuerkurve das Steuerrad 38 und mittelbar somit auch die Welle 36 antreibbar sind.

Die Behälterträger 27, idealerweise alle Behälterträger 27, weisen ein Eingriffelement 40 in Form eines Zahns 40, Bolzens oder Rades auf, welche von dem zentralen Antrieb 28 erfassbar und antreibbar sind. Dabei sollte der zentrale Antrieb 28 derart geformt sein, dass immer die Eingriffselemente 40 von mindestens zwei Halte- und Zentriereinheiten 29 gleichzeitig erfassbar sind.

Besonders vorteilhaft ist es, den zentralen Antrieb 28 als eine Antriebsschnecke oder -spindel auszuformen. Der Motor sollte vorteilhafterweise als ein stufenlos regelbarer Servoantrieb, insbesondere als ein Rohrantrieb gebildet sein.

Da die Behälter zueinander immer identisch beabstandet bleiben können und stets die selbe Geschwindigkeit aufweisen, ist es vorteilhaft, wenn die Behälterträger 27 eine keil- oder segmentförmige Schattenfläche, ähnlich einem Tortenstück, aufweisen, so dass diese in den Kurven mit dem radial innen liegenden Ende angenähert oder verdichtet werden können. In Figur 9 ist noch eine Lagerung 41 der Drehtellerwelle 36 erkennbar.

Besonders vorteilhaft und stabil ist das Laufverhalten, wenn das Führungs- und Tragelement 26 mindestens zwei übereinander angeordnete Schienen 34 aufweist und die Behälterträger 27 hierzu die oben erwähnten korrelierende schlitten- oder wagenartige Führungseinheiten 30 umfassen.

Die vorgenannte Vorrichtung kann Teil einer vorstehend beispielhaft beschriebenen Gebindeherstellungs- oder Etikettiervorrichtung sein und hierzu an oder entlang ihrer Transportweges ein oder mehrere Auftrags- oder Spenderelemente in Form von Applikationsvorrichtungen für Leim- oder Klebemittel oder für Einzelblatt- oder Rundumetiketten umfassen.

### Bezugszeichenliste:

- 1: Vorrichtung zur Herstellung von GebindenNerpackungsmaschine
- 2: Gebinde
- 3: Behälter
- 4: Behälterspur (4.1 und 4.2)
- 5: Sterntransporteur
- 6: Fußseitige Führung
- 7: Kopfführung
- 8: Auftragelemente
- 9: Eingangsseite
- 10: Ausgangsseite
- 11: Einleitvorrichtung
- 12: Hauptstern
- 13: Ausleitvorrichtung
- 14: Axiale Transportrichtung
- 15: Lineartransporteur
- 16: Führungselemente
- 17: Aushärtestation
- 18: Rotationsrichtung von 12
- 19: Zusammenführen von 3 aus 13 auf 15
- 20: Drehen von 3
- 21: Mitnehmerelemente
- 22: Abteil- und/oder Verdichtereinheit /strecke
- 23: Ausrichtstern
- 24: Erkennungssystem
- 25: Übergabestern
- 26: Führungs- und Tragelement
- 27: Behälterträger
- 28: Zentraler Antrieb
- 29: Halte- und Zentriereinheit
- 30: Wagenartige Führungseinheit
- 31: Gerader Abschnitt
- 32: Kurviger Abschnitt
- 33: Verbindungselement
- 34: Schiene
- 35: Drehteller
- 36: Welle
- 37: Zahn- oder Keilriemen
- 38: Steuerrad
- 39: Steuerbolzen
- 40: Eingriffselement
- 41: Lagerung Drehtellerwelle

## Patentansprüche

1. Vorrichtung zur Behandlung von Behältern, insbesondere Dosen, Flaschen und derglelchen, umfassend ein ringförmig geschlossenes Führungs- und Tragelement (26), eine Vielzahl von kettenartig verbindbaren Behälterträgern (27), mindestens einem zentralen Antrieb (28), wobei jeder Behälterträger (27) zur Aufnahme eines einzelnen Behälters ausgebildet ist und eine Halte- und Zentriereinheit (29) zum Halten und Zentrieren des jeweiligen Behälters, sowie einen Einzelantrieb zur Drehung oder Rotation um dessen Behälterhochachse umfasst, und weiterhin die Behälterträger schlitten- oder wagenartige Führungseinheiten (30) umfassen, mittels welcher diese an dem Führungs- und Tragelement (26) endlos umlaufend verfahrbar sind, wobei eine gedachte vertikale Rotationsachse (X1) der Halte- und Zentriereinheit (29) und der des Einzelantriebes, deckungsgleich mit der Hochachse eines eingestellten Behälters ist, wobei
das Führungs- und Tragelement (26) Abschnitte (31,32) mit unterschiedlichen Radien umfasst, Insbesondere gerade Abschnitte (31), d.h. radlusfrele Abschnitte bzw. Abschnitte mit einem unendlich großen Radius, und kurvige Abschnitt (32). d.h. Abschnitte mit einem Radius, umfasst, insbesondere in der Form eines Ovals oder einer Ellipse, wobei die Halte- und Zentriereinheiten mittels Verbindungs-elementen (33) verbunden sind, welche fluchtend zur jeweiligen vertikalen Rotationsachse (X1) oder konzentrisch zu dieser an der jeweiligen Halte- und Zentriereinheit (29) gelagert und/oder befestigt sind, wodurch alle endlos umlaufenden vertikalen Rotationsachsen (X1) der Halte- und Zentriereinheiten (29) respektive dort befindliche Behälter in jedem Abschnitt des Führungs- und Tragelements (26) mit der selben Geschwindigkeit bewegbar sind.

2. Vorrichtung zur Behandlung von Behältern nach Anspruch 1, **dadurch gekennzeichnet, dass** das die Halte- und Zentriereinheit (29) einen rotier- oder antreibbaren Drehteller (35) und/oder eine ebenfalls rotier- oder antreibbare Zentrier- und Haltetulpe aufweist.

3. Vorrichtung zur Behandlung von Behältern nach Anspruch 2, **dadurch gekennzeichnet, dass** der antreibbaren Drehteller (35) und/oder die rotier- oder antreibbare Zentrier- und Haltetulpe am Ende einer Welle (36) angeordnet ist, und die Welle (36) über eine Transmissions-, Zahn-, Keilriemen (37) oder dergleichen mit einem Steuerrad (38) in Wirkverbindung steht, und wobei das Steuerrad (38) einen Steuerbolzen (39) aufweist, mittels welchem im Zusammenwirken mit einer Steuerkurve das Steuerrad (38) und mittelbar somit auch die Welle (36) antreibbar sind.

4. Vorrichtung zur Behandlung von Behältern nach Ansprüche 1 bis 3, **dadurch gekennzeichnet, dass** mindestens eine Mehrzahl der Behälterträger (27) ein Eingriffelement (40) in Form eines Zahns, Bolzens oder Rades aufweisen, welche von dem zentralen Antrieb (28) erfassbar und antreibbar sind.

5. Vorrichtung zur Behandlung von Behältern nach Anspruch 4, **dadurch gekennzeichnet, dass** der zentrale Antrieb (28) derart geformt ist, dass immer die Eingriffselemente (40) von mindestens zwei Halte- und Zentriereinheiten (29) gleichzeitig erfassbar sind.

6. Vorrichtung zur Behandlung von Behältern nach einem der Ansprüche 1 bis 5, **dadurch gekennzeichnet, dass** der zentrale Antrieb (28) eine Antriebsschnecke oder -spindel ist, insbesondere ein stufenlos regelbarer Servoantrieb, insbesondere ein solcher Rohrantrieb.

7. Vorrichtung zur Behandlung von Behältern nach einem der vorgenannten Ansprüche 1 bis 3, **dadurch gekennzeichnet, dass** unterhalb der Drehteller (35) eine kurvengängige Zahnkette angeordnet ist, mit welcher die Behälterträger (27) verbunden sind, und der zentrale Antrieb (28) mittels einem oder mehreren Zahnrädern oder - bändern oder dergleichen in die Zähne der Zahnkette eingreift und diese somit antreibbar ist.

8. Vorrichtung zur Behandlung von Behältern nach einem der vorgenannten Ansprüche, **dadurch gekennzeichnet, dass** die Behälterträger (27) eine keil- oder segmentförmige Schattenfläche, ähnlich einem Tortenstück, hat.

9. Vorrichtung zur Behandlung von Behältern nach einem der vorgenannten Ansprüche, **dadurch gekennzeichnet, dass** das Führungs- und Tragelement (26) mindestens zwei übereinander angeordnete Schienen (34) aufweist und die Behälterträger (27) hierzu korrelierende schlitten- oder wagenartige Führungseinheiten (30) aufweisen.

10. Vorrichtung zur Behandlung von Behältern nach einem der vorgenannten Ansprüche, **dadurch gekennzeichnet, dass** an oder entlang dieser ein oder mehrere Auftrags- oder Spenderelemente vorgesehen sind.

11. Vorrichtung zur Behandlung von Behältern nach Anspruch 10, **dadurch gekennzeichnet, dass** die Auftragselemente Applikationsvorrichtungen für Leimoder Klebemittel sind.

12. Vorrichtung zur Behandlung von Behältern nach Anspruch 10, **dadurch gekennzeichnet, dass** die Auftragselemente Applikationsvorrichtungen für Einzelblatt- oder Rundumetiketten sind.

## Claims

1. Device for treating containers, in particular cans, bottles, and the like, comprising an annularly closed guiding and carrying element (26), a plurality of container carriers (27) which can be connected in a chain-like manner, and at least one central drive (28), wherein each container carrier (27) is configured for receiving an individual container and comprises a holding and centring unit (29) for holding and centring the respective container and an individual drive for turning or rotating a container about the vertical axis thereof, and, furthermore, the container carriers comprise chute-like or carriage-like guide units (30), by means of which said container carriers can be moved on the guiding and carrying element (26) in an endlessly circulating manner, wherein an imaginary vertical rotational axis (X1) of the holding and centring unit (29) and that of the individual drive is congruent with the vertical axis of an inserted container, wherein the guiding and carrying element (26) comprises sections (31, 32) with different radii, in particular straight sections (31), i.e. radius-free sections, or sections with an infinitely great radius, and curved sections (32), i.e. sections with a radius, in particular in the form of an oval or ellipse, wherein the holding and centring unit (29) is connected by means of connecting elements (33) which are mounted and/or secured on the holding and centring unit (29) in a flush manner with respect to the respective vertical rotational axis (X1) of the holding and centring units (29) or containers located there can be moved at the same speed in every section of the guiding and carrying element (26).

2. Device for treating containers according to claim 1, **characterised in that** the holding and centring unit (29) comprises a rotatable or drivable rotating plate (35) and/or a likewise rotatable or drivable centring and holding tulip.

3. Device for treating containers according to claim 2, **characterised in that** the drivable rotating plate (35) and/or the rotatable or drivable centring and holding tulip is arranged at the end of a shaft (36), and the shaft (36) is in working connection with a control wheel (38), via a transmission, toothed, or vee-belt (37) or the like, and wherein the control wheel (38) comprises a control bolt (39), by means of which, in interaction with a control curve, the control wheel (38), and thereby indirectly also the shaft (36), can be driven.

4. Device for treating containers according to claims 1 to 3, **characterised in that** at least a plurality of the container carriers (27) comprise an engagement element (40) in the form of a tooth, bolt, or wheel, which can be engaged and driven by the central drive (28).

5. Device for treating containers according to claim 4, **characterised in that** the central drive (28) is formed in such a way that the engagement elements (40) can always be engaged simultaneously by at least two holding and centring units (29).

6. Device for treating containers according to any one of claims 1 to 5, **characterised in that** the central drive (28) is a drive worm or spindle, in particular a steplessly regulatable servo drive, in particular such a cylinder drive.

7. Device for treating containers according to any one of the preceding claims 1 to 3, **characterised in that**, arranged beneath the rotating plate (35), is a curved-path toothed chain, with which the container carriers (27) are connected, and the central drive (28) engages, by means of one or more toothed wheels or belts or the like, into the teeth of the toothed chain, and this can therefore be driven.

8. Device for treating containers according to any one of the preceding claims, **characterised in that** the container carriers (27) have a wedge-shaped or segment shadow surface, similar to a section of pie.

9. Device for treating containers according to any one of the preceding claims, **characterised in that** the guiding and carrying element (26) comprises at least two rails (34) arranged above one another, and the container carriers (27) comprise guide units (30) in the form of slides or carriages which correlate with the said rails.

10. Device for treating containers according to any one of the preceding claims, **characterized in that**, provided on or along it, are one or more application or dispensing elements.

11. Device for treating containers according to claim 10, **characterised in that** the application elements are application devices for adhesive or gluing agents.

12. Device for treating containers according to claim 10, **characterised in that** the application elements are application devices for single-sheet or all-round labels.

## Revendications

1. Dispositif de traitement de récipients, en particulier de boîtes, bouteilles et similaires, comprenant un élément de guidage et de support (26) fermé en anneau, une pluralité de supports de contenant (27) pouvant être reliés comme une chaîne, au moins un entraînement central (28), chaque support de récipient (27) étant réalisé pour la réception d'un récipient individuel et comportant une unité de retenue et de centrage (29) pour le maintien et le centrage du récipient concerné, ainsi qu'un entraînement individuel pour la torsion ou la rotation autour de son axe vertical de récipient, et en outre les supports de récipient comportant des unités de guidage (30) de type chariot ou wagon, à l'aide desquelles ceux-ci sont déplaçables en rotation sans fin sur l'élément de guidage et de support (26), un axe de rotation vertical imaginaire (X1) de l'unité de retenue et de centrage (29) et celui de l'entraînement individuel étant coïncidents avec l'axe vertical d'un récipient réglé,
l'élément de guidage et de support (26) comportant des sections (31, 32) avec différents rayons, en particulier des sections droites (31), c'est-à-dire des sections sans rayon ou sections avec un rayon infiniment grand, et une section courbée (32), c'est-à-dire des sections avec un rayon, en particulier sous la forme d'un ovale ou d'une ellipse, les unités de retenue et de centrage (29) étant reliées à l'aide d'éléments de liaison (33) qui sont logés et/ou fixés de manière à s'aligner sur l'axe de rotation (X1) vertical concerné ou concentriquement à celui-ci sur l'unité de retenue et de centrage concernée (29), par quoi tous les axes de rotation (X1) verticaux tournant sans fin des unités de retenue et de centrage (29) et les récipients s'y trouvant sont mobiles dans chaque section de l'élément de guidage et de support (26) avec la même vitesse.

2. Dispositif de traitement de récipients selon la revendication 1, **caractérisé en ce que** l'unité de retenue et de centrage (29) présente un plateau tournant (35) entraînable ou pouvant tourner et/ou une tulipe de centrage et de retenue entraînable ou pouvant tourner aussi.

3. Dispositif de traitement de récipients selon la revendication 2, **caractérisé en ce que** le plateau tournant entraînable (35) et/ou la tulipe de centrage et de retenue entraînable ou pouvant tourner est agencée sur l'extrémité d'un arbre (36), et l'arbre (36) est en liaison active par le biais d'une courroie de transmission, dentée, trapézoïdale (37) ou similaire avec une roue de commande (38), et la roue de commande (38) présentant un boulon de commande (39), à l'aide duquel la roue de commande (38) et indirectement ainsi aussi l'arbre (36) peuvent être entraînés en coaction avec une came de commande.

4. Dispositif de traitement de récipients selon les revendications 1 à 3, **caractérisé en ce qu'**au moins une pluralité de supports de récipients (27) présente un élément d'engagement (40) sous la forme d'une dent, d'un boulon ou d'une roue qui peuvent être détectés et entraînés par l'entraînement central (28).

5. Dispositif de traitement de récipients selon la revendication 4, **caractérisé en ce que** l'entraînement central (28) est formé de telle manière que les éléments d'engagement (40) puissent toujours être détectés simultanément par au moins deux unités de retenue et de centrage (29).

6. Dispositif de traitement de récipients selon l'une quelconque des revendications 1 à 5, **caractérisé en ce que** l'entraînement central (28) est une vis ou une broche d'entraînement, en particulier un servoentraînement réglable en continu, en particulier un tel entraînement tubulaire.

7. Dispositif de traitement de récipients selon l'une quelconque des revendications précédentes 1 à 3, **caractérisé en ce qu'**une chaîne dentée courbe est agencée sous le plateau tournant (35), à laquelle les supports de récipient (27) sont reliés et l'entraînement central (28) s'engage à l'aide d'une ou plusieurs roues ou bandes dentées ou similaires dans les dents de la chaîne dentée et celle-ci peut ainsi être entraînée.

8. Dispositif de traitement de récipients selon l'une quelconque des revendications précédentes, **caractérisé en ce que** les supports de récipient (27) ont une surface ombrée en forme de clavette ou segment, similaire à une part de tarte.

9. Dispositif de traitement de récipients selon l'une quelconque des revendications précédentes, **caractérisé en ce que** l'élément de guidage et de support (26) présente au moins deux rails (34) agencés l'un sur l'autre et les supports de récipients (27) présentent des unités de guidage (30) de type chariot ou wagon en corrélation avec ceux-ci.

10. Dispositif de traitement de récipients selon l'une quelconque des revendications précédentes, **caractérisé en ce qu'**un ou plusieurs éléments d'application ou de distribution sont prévus sur ou le long de celui-ci.

11. Dispositif de traitement de récipients selon la revendication 10, **caractérisé en ce que** les éléments d'application sont des dispositifs d'application de colles ou d'adhésifs.

12. Dispositif de traitement de récipients selon la revendication 10, **caractérisé en ce que** les éléments d'application sont des dispositifs d'application pour des étiquettes à une seule feuille ou circulaires.
